# EUROPEAN PATENT APPLICATION

(11) **EP 4 628 733 A1**
(43) Date of publication of application: **08.10.2025**
(21) Application number: 23897728.4
(22) Date of filing: 27.11.2023
(51) Int. Cl.: F04D 19/04, G01B 7/00

(54) **VACUUM PUMP AND FOREIGN-MATTER SENSOR**

(30) Priority: 28.11.2022 JP 2022189152
(71) Applicant: Edwards Japan Limited, Yachiyo-shi, Chiba 276-8523 (JP)
(72) Inventor: KABASAWA, Takashi, Yachiyo-shi Chiba 276-8523 (JP)
(74) Representative: Openshaw & Co.
(86) International application number: PCT/JP2023/042364
(87) International publication number: WO 2024/117080

(57) **Abstract**

Provided is a vacuum pump capable of accurately detecting a change in capacitance.

A vacuum pump includes: an outer cylinder having an exhaust path through which exhaust gas flows; a threaded spacer to be heated by a heater; a base portion to be cooled by a water cooled tube; and a foreign matter sensor that detects foreign matter. The foreign matter sensor includes a pair of electrodes of which capacitance is variable with accumulation of foreign matter, and a capacitance measuring portion that measures the capacitance between the electrodes. The electrodes are disposed in the threaded spacer, and the capacitance measuring portion is disposed in the base portion.

## Description

The present invention relates to a vacuum pump such as, for example, a turbomolecular pump and a foreign matter sensor used in a vacuum pump.

Generally, turbomolecular pumps have been known as one type of vacuum pumps. For example, the turbomolecular pumps are used to exhaust gas in devices that manufacture semiconductors, flat panels, or the like. In the turbomolecular pumps, rotor blades are rotated by the application of power to a motor inside a pump body, and gas molecules of gas (process gas) sucked into the pump body are ejected to exhaust the gas. Further, some of the turbomolecular pumps include a heater or a cooling tube to properly manage the temperature inside the pumps.

In vacuum pumps such as turbomolecular pumps, reactive products occurring in the manufacturing process of semiconductors or the like may be accumulated inside the vacuum pumps. Technologies to detect accumulated amounts using a change in capacitance have been devised.

Patent Literature 1 discloses a technology to detect a change in capacitance due to a deposit accumulated between parallel flat-plate-shaped electrodes. Patent Literature 2 discloses a technology to detect a change in capacitance due to a deposit accumulated on the surface of a comb-teeth-shaped electrode.
Patent Literature 1: Japanese Patent Application Laid-open No. 2018-159632
Patent Literature 2: Japanese Patent Application Laid-open No. 2021-195893

When electrodes for detecting a deposit are downsized, a change in capacitance due to the deposit also becomes small (for example, 1 to 2 pF (picofarad) or so). Therefore, the influence of parasitic capacitance caused in cables or connectors that connect electrodes to a detecting circuit becomes non-negligible.

The influence of the parasitic capacitance becomes large in the following cases (A) and (B).
(A) A case that the distance between positive and negative cables connecting the sensor to the detecting circuit or the distance between the cables and a walls surface (metal wall surface) is short.
(B) A case that the cables are long.

In order to solve the above problems (A) and (B), the electrodes and the detecting circuit may be integrated to minimize the lengths of the cables. For example, sensors in which electrodes and a detecting circuit are integrated have been widely used as proximity sensors, liquid level sensors, or the like. However, a gas flow path in which the sensors are installed is heated at high temperature, and the integration of the electrodes and the detection circuit causes the following problems (1) and (2).
(1) When both (the electrodes and the detecting circuit) are installed in the high-temperature gas flow path, the electrodes are kept at high temperature and an accumulated amount is appropriately detectable. However, the detecting circuit is easily overheated.
(2) When both (the electrodes and the detecting circuit) are installed in a low-temperature portion, the detecting circuit is hardly overheated. However, the temperatures of the electrodes reduce, and an accumulated amount is not appropriately detectable.

Due to the above problems (1) and (2), it is not practical to integrate electrodes and a detecting circuit and install the same inside a pump. Conventionally, the electrodes are installed inside the pump, the detecting circuit is installed inside a controlling circuit outside the pump, and both the electrodes and the detecting circuit are connected to each other by cables. This configuration is shown in FIGS. 1 and 2 of Patent Literature 1 or FIG. 6 of Patent Literature **2.**

However, when the electrodes are installed inside the pump and the detecting circuit is installed outside the pump, the distance between the pump and the detecting circuit may be several meters long. Further, the lengthened cables may be largely influenced by parasitic capacitance.

Further, the parasitic capacitance may change when the cables move. In this case, a change in capacitance due to the movement of the cables and a change in capacitance due to a deposit may not be distinguished from each other.

The present invention has an object of providing a vacuum pump and a foreign matter sensor capable of accurately detecting a change in capacitance.
(1) In order to achieve the above object, a vacuum pump according to the present invention includes:
   a vacuum container having an exhaust path through which exhaust gas flows; a high-temperature portion to be heated by a heating means; a low-temperature portion to be cooled by a cooling means; and a foreign matter sensor that detects foreign matter.

The foreign matter sensor includes
a pair of electrodes of which capacitance is variable with accumulation of foreign matter, and a capacitance measuring means that measures the capacitance between the electrodes.

The electrodes are disposed in the high-temperature portion, and
the capacitance measuring means is disposed in the low-temperature portion.

(2) In order to achieve the above object, a foreign matter sensor according to the present invention is used in a vacuum pump having a vacuum container having an exhaust path through which exhaust gas flows, a high-temperature portion to be heated by a heating means, and a low-temperature portion to be cooled by a cooling means and detects foreign matter. The foreign matter sensor includes:
a pair of electrodes of which capacitance is variable with accumulation of foreign matter; and
a capacitance measuring means that measures the capacitance between the electrodes.

The electrodes are disposed in the high-temperature portion, and
the capacitance measuring means is disposed in the low-temperature portion.

According to the present invention, it is possible to provide a vacuum pump capable of accurately detecting a change in capacitance.

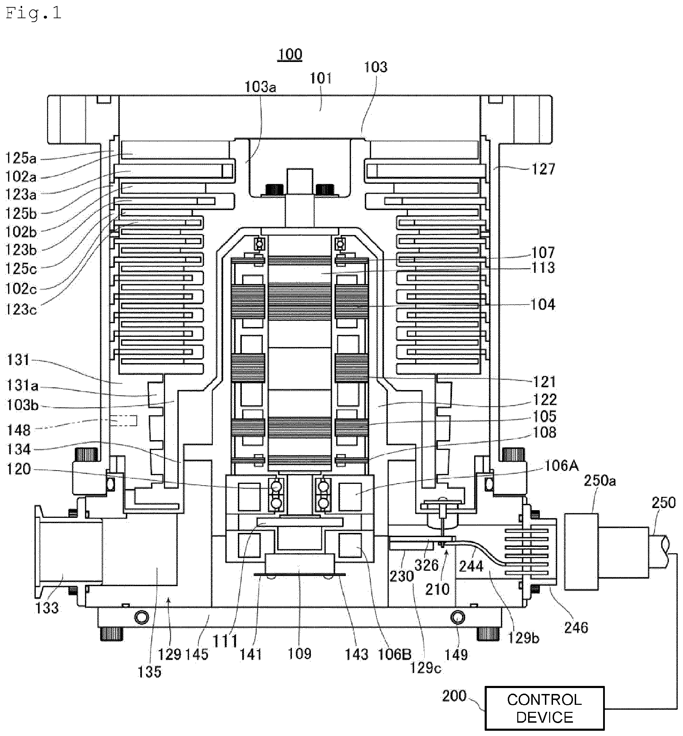

FIG. 1 is an explanatory view schematically showing the configuration of a turbomolecular pump according to a first embodiment of the present invention;

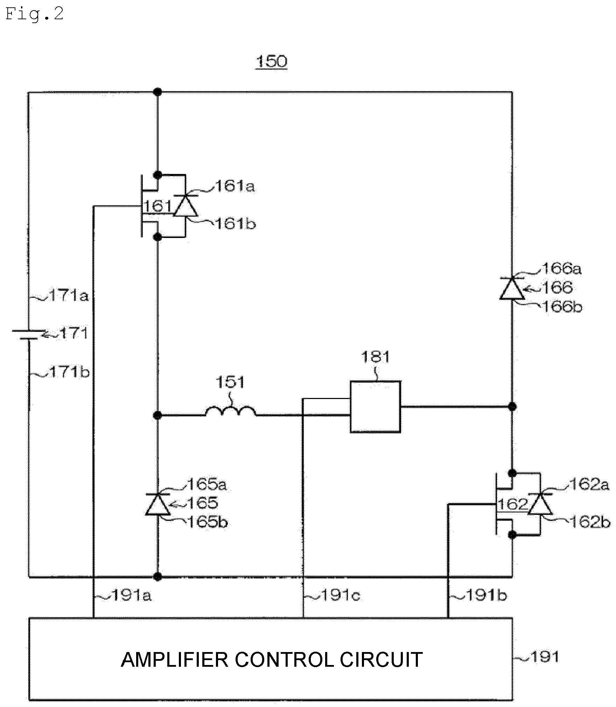

FIG. 2 is a diagram of an amplifier circuit;

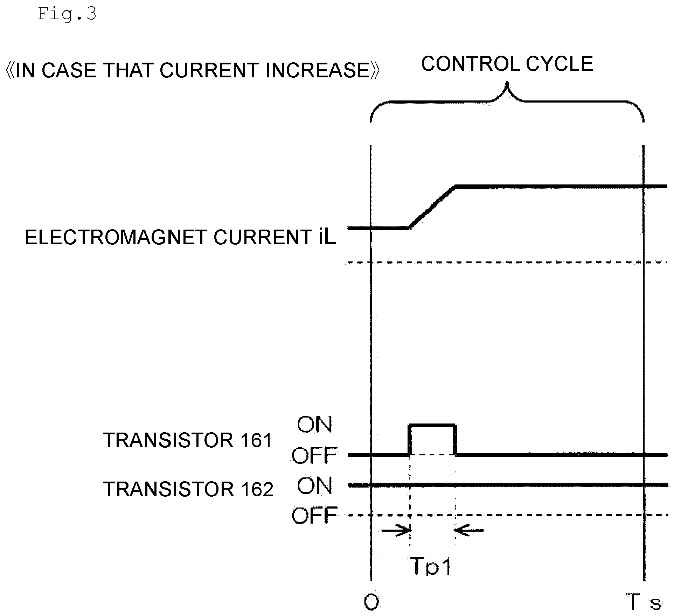

FIG. 3 is a time chart showing control in a case in which a current command value is greater than a detected value;

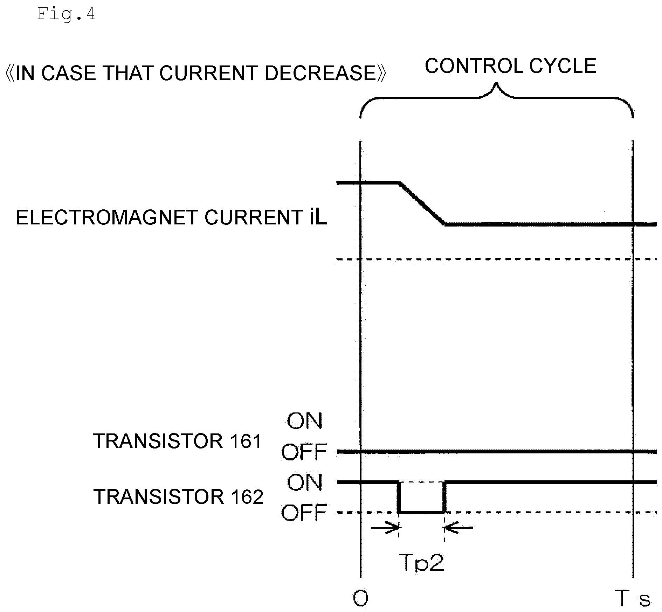

FIG. 4 is a time chart showing control in a case in which the current command value is smaller than the detected value;

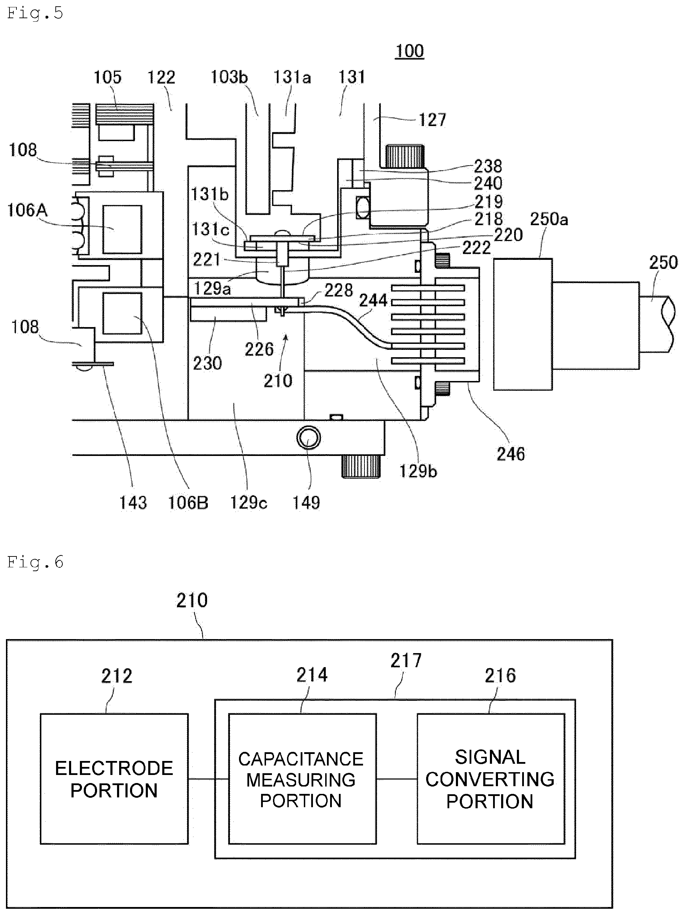

FIG. 5 is an explanatory view showing a part of the turbomolecular pump according to the first embodiment in an enlarged fashion;
FIG. 6 is a block diagram schematically showing the configuration of a foreign matter sensor;

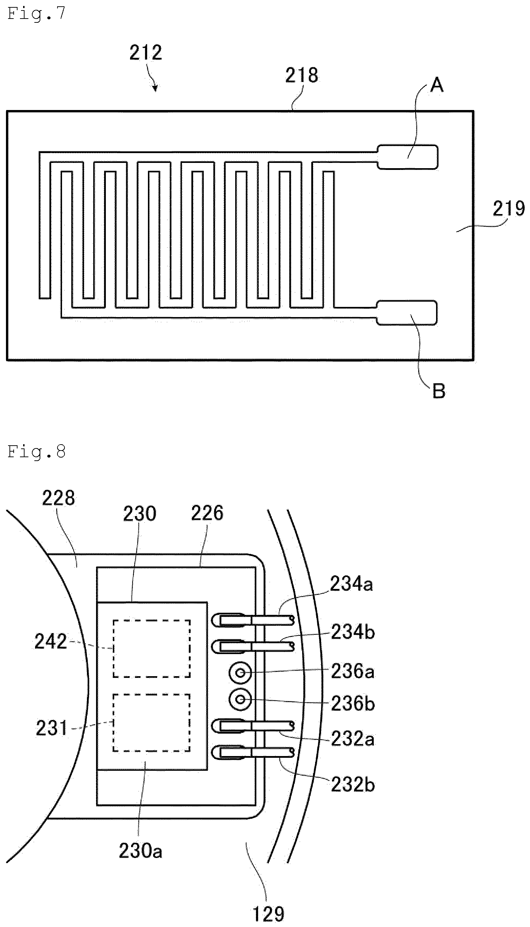

FIG. 7 is an explanatory view showing an example of electrodes in an electrode portion;
FIG. 8 is an explanatory view showing the state of a measurement converting substrate when seen from below FIG. 5;

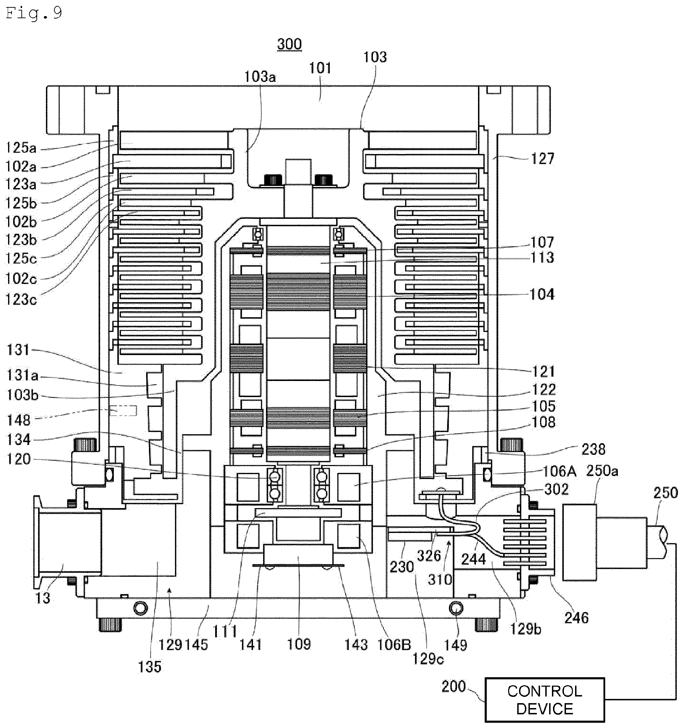

FIG. 9 is an explanatory view schematically showing the configuration of a turbomolecular pump according to a second embodiment of the present invention;

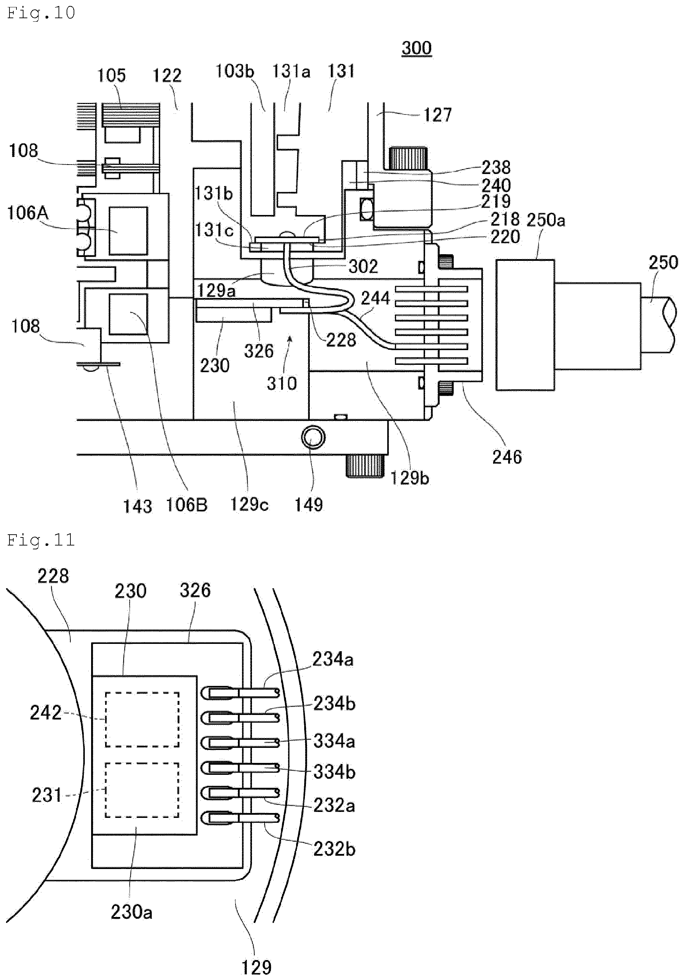

FIG. 10 is an explanatory view showing a part of the turbomolecular pump according to the second embodiment in an enlarged fashion;
FIG. 11 is an explanatory view showing the state of a measurement converting substrate when seen from below FIG. 10;

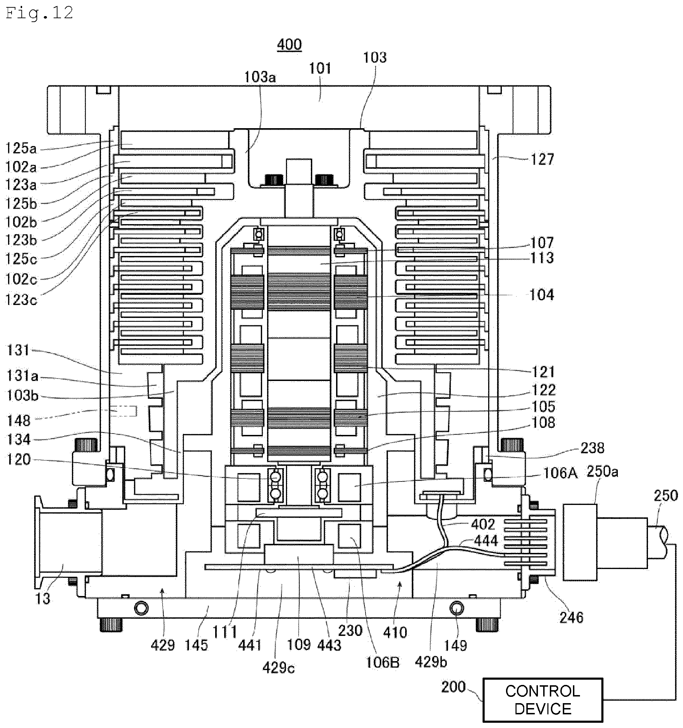

FIG. 12 is an explanatory view schematically showing the configuration of a turbomolecular pump according to a third embodiment of the present invention;

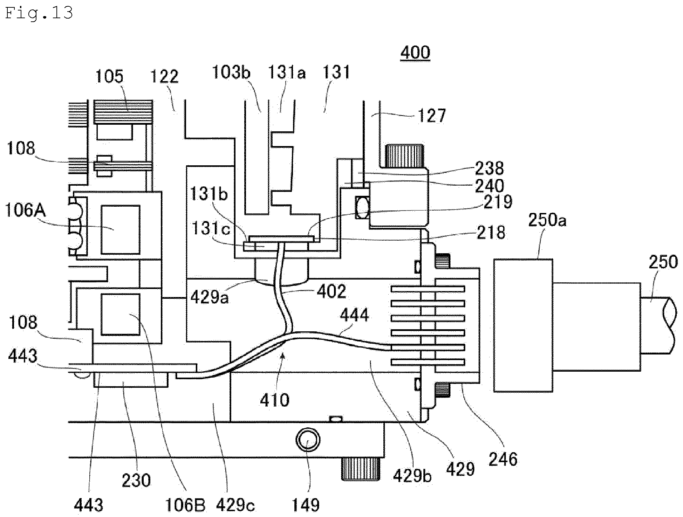

FIG. 13 is an explanatory view showing a part of the turbomolecular pump according to the third embodiment in an enlarged fashion; and

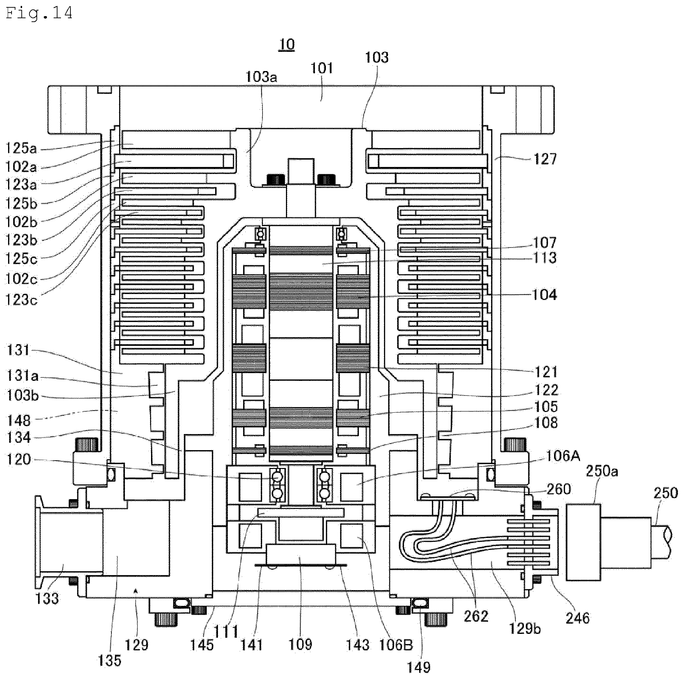

FIG. 14 is an explanatory view showing an example of a related art.

### Basic Configuration of Turbomolecular Pump 100 According to First Embodiment

FIG. 1 shows a turbomolecular pump 100 as a vacuum pump according to a first embodiment of the present invention. The turbomolecular pump 100 is connected to, for example, a vacuum chamber (not shown) of target equipment such as a semiconductor manufacturing apparatus.

FIG. 1 shows a vertical cross-sectional view of the turbomolecular pump 100. In FIG. 1, the turbomolecular pump 100 has an inlet port 101 at the upper end of a cylindrical outer cylinder 127. Inside the outer cylinder 127, the turbomolecular pump 100 includes a rotating body 103 having a plurality of rotor blades 102 (102a, 102b, 102c, etc.) serving as turbine blades for sucking and exhausting gas at its peripheral portion radially and in multiple stages. At the center of the rotating body 103, a rotor shaft 113 is attached. The rotor shaft 113 is floated and position-controlled in the air by, for example, a five-axis control magnetic bearing.

Four upper radial electromagnets 104 are arranged in pairs in X and Y axes. Four upper radial sensors 107 are provided so as to be close to the upper radial electromagnets 104 and correspond to the respective upper radial electromagnets 104. Inductance sensors, eddy-current sensors, or the like having a conductive coil are, for example, used as the upper radial sensors 107. The position of the rotor shaft 113 is detected on the basis of a change in the inductance of the conductive coil that changes in accordance with the position of the rotor shaft 113. The upper radial sensors 107 are configured to detect the radial displacement of the rotor shaft 113, that is, the radial displacement of the rotating body 103 fixed to the rotor shaft 113 and transmit the detected displacement to a control device 200.

In the control device 200, for example, a compensating circuit having a PID adjusting function generates an excitation control command signal for the upper radial electromagnets 104 on the basis of a position signal detected by the upper radial sensors 107, and an amplifier circuit 150 (that will be described later) shown in FIG. 2 controls the excitation of the upper radial electromagnets 104 on the basis of the excitation control command signal. Thus, the upper radial position of the rotor shaft 113 is adjusted.

The rotor shaft 113 is made of a high permeability material (such as iron and stainless steel) or the like and sucked by the magnetic forces of the upper radial electromagnets 104. The adjustment is separately performed in each of an X-axis direction and a Y-axis direction. Further, lower radial electromagnets 105 and lower radial sensors 108 are arranged like the upper radial electromagnets 104 and the upper radial sensors 107 and adjust the lower radial position of the rotor shaft 113 like the upper radial position.

In addition, axial electromagnets 106A and 106B are arranged with a disc-shaped metal disc (also called an "armature disc") 111 at the lower portion of the rotor shaft 113 vertically held therebetween. The metal disc 111 is made of a highly permeable material. An axial sensor 109 is provided to detect the axial displacement of the rotor shaft 113, and an axial position signal is configured to be transmitted to the control device 200.

Then, in the control device 200, for example, the compensating circuit having the PID adjusting function generates an excitation control command signal for each of the axial electromagnet 106A and the axial electromagnet 106B on the basis of the axial position signal detected by the axial sensor 109, and the amplifier circuit 150 controls the excitation of each of the axial electromagnet 106A and the axial electromagnet 106B on the basis of the excitation control command signal. Thus, the axial electromagnet 106A sucks the metal disc 111 upward by a magnetic force, and the axial electromagnet 106B sucks the metal disc 111 downward by a magnetic force, so that the axial position of the rotor shaft 113 is adjusted.

As described above, the control device 200 appropriately adjusts a magnetic force applied to the metal disc 111 by the axial electromagnets 106A and 106B and magnetically floats the rotor shaft 113 in an axial direction and retains the same in a non-contact manner in a space. Note that the amplifier circuit 150 that controls the excitation of the upper radial electromagnets 104, the lower radial electromagnets 105, and the axial electromagnets 106A and 106B will be described later.

Meanwhile, a motor 121 includes a plurality of magnetic poles circumferentially arranged so as to surround the rotor shaft 113. The respective magnetic poles are controlled by the control device 200 so as to rotate and drive the rotor shaft 113 via an electromagnetic force applied between the respective magnetic poles and the rotor shaft 113. Further, a rotating speed sensor such as a hall element, a resolver, and an encoder not shown is, for example, incorporated into the motor 121, and the rotating speed of the rotor shaft 113 is detected by the detection signal of the rotating speed sensor.

In addition, a phase sensor not shown is attached near, for example, the lower radial sensors 108 and detects the phase of the rotation of the rotor shaft 113. The control device 200 detects the positions of the magnetic poles using both the detection signals of the phase sensor and the rotating speed sensor.

A plurality of stator blades 123 (123a, 123b, 123c, etc.) are disposed with a slight gap with respect to the rotor blades 102 (102a, 102b, 102c, etc.). Each of the rotor blades 102 (102a, 102b, 102c, etc.) is formed to be inclined by a prescribed angle from a plane perpendicular to the axial line of the rotor shaft 113 to transfer the molecules of exhaust gas downward by collision.

Further, the stator blades 123 are also similarly formed to be inclined by a prescribed angle from the plane perpendicular to the axial line of the rotor shaft 113 and disposed alternately with the stages of the rotor blades 102 toward the inside of the outer cylinder 127. The outer peripheral ends of the stator blades 123 are supported in a state of being fitted and inserted between a plurality of stacked stator blade spacers 125 (125a, 125b, 125c, etc.).

The stator blade spacers 125 are ring-shaped members and made of, for example, metal such as aluminum, iron, stainless steel, and copper or metal such as an alloy containing these metal as components. On the periphery of the stator blade spacers 125, the outer cylinder 127 is fixed with a slight gap. A base portion 129 is disposed at the bottom of the outer cylinder 127. An outlet port 133 is formed on the base portion 129 and communicates with an outside. Exhaust gas transferred to the base portion 129 after entering the inlet port 101 from the side of a chamber (vacuum chamber) is supplied to the outlet port 133.

In addition, a threaded spacer 131 is disposed between the lower portion of the stator blade spacers 125 and the base portion 129 depending on the use of the turbomolecular pump 100. The threaded spacer 131 is a cylindrical member made of metal such as aluminum, copper, stainless steel, iron, and an alloy containing these metal as components and has a plurality of spiral thread grooves 131a engraved on its inner peripheral surface. The spiral direction of the thread grooves 131a is a direction in which the molecules of exhaust gas are transferred to the outlet port 133 when the molecules move in the rotating direction of the rotating body 103. A rotating-body lower cylindrical portion 103b suspends from the lower portion of a rotating-body main body 103a having the rotor blades 102 (102a, 102b, 102c, etc.) of the rotating body 103. The outer peripheral surface of the rotating-body lower cylindrical portion 103b has a cylindrical shape, overhangs toward the inner peripheral surface of the threaded spacer 131, and comes close to the inner peripheral surface of the threaded spacer 131 with a prescribed gap. The exhaust gas transferred to the thread grooves 131a by the rotor blades 102 and the stator blades 123 is supplied to the base portion 129, while being guided by the thread grooves 131a. As described above, the threaded spacer 131 and the rotating-body lower cylindrical portion 103b opposed to the threaded spacer 131 constitute a Holweck-type exhausting mechanism portion 204. In the Holweck-type exhausting mechanism portion 204, the rotating-body lower cylindrical portion 103b rotates with respect to the threaded spacer 131 to give directionality to the exhaust gas and improve the exhausting characteristics of the turbomolecular pump 100.

The base portion 129 is a disc-shaped member constituting the base portion of the turbomolecular pump 100 and is generally made of metal such as iron, aluminum, and stainless steel. Since the base portion 129 serves also as a heat conducting path besides physically retaining the turbomolecular pump 100, metal such as iron, aluminum and copper having stiffness and high heat conductivity is desirably used as such.

According to the above configuration, exhaust gas is sucked from the chamber via the inlet port 101 by the operation of the rotor blades 102 and the stator blades 123 when the rotor blades 102 are rotationally driven by the motor 121 together with the rotor shaft 113. The exhaust gas sucked via the inlet port 101 is transferred to the base portion 129 after passing through between the rotor blades 102 and the stator blades 123. At this time, the temperature of the rotor blades 102 increases due to friction heat generated when the exhaust gas contacts the rotor blades 102, the conduction of heat generated by the motor 121, or the like. However, the heat is transferred to the side of the stator blades 123 through radiation or conduction by the gas molecules or the like of the exhaust gas.

The stator blade spacers 125 are bonded to each other at an outer peripheral portion and transfer heat received by the stator blades 123 from the rotor blades 102, friction heat generated when exhaust gas contacts the stator blades 123, or the like to the outside.

Note that the above description assumes that the threaded spacer 131 is disposed on the periphery of the rotating-body lower cylindrical portion 103b of the rotating body 103, and that the thread grooves 131a are engraved on the inner peripheral surface of the threaded spacer 131. Contrary to this, there is also a case that thread grooves are engraved on the outer peripheral surface of the rotating-body lower cylindrical portion 103b, and that a spacer having a cylindrical inner peripheral surface is arranged around the thread grooves.

Further, depending on the use of the turbomolecular pump 100, there is also a case that the surrounding area of an electrical portion including the upper radial electromagnets 104, the upper radial sensors 107, the motor 121, the lower radial electromagnets 105, the lower radial sensors 108, the axial electromagnets 106A and 106B, the axial sensor 109, or the like is covered with a stator column 122, and that the pressure inside the stator column 122 is retained at a prescribed pressure by a purge gas in order to prevent gas sucked via the inlet port 101 from entering the electrical portion.

In this case, a purge gas port (not shown) is disposed in the base portion 129, and a purge gas is introduced via the piping. The introduced purge gas is delivered to the outlet port 133 via a gap between a protecting bearing 120 and the rotor shaft 113, a gap between the rotor and the stator of the motor 121, and a gap 134 between a cylindrical portion (the rotating-body lower cylindrical portion 103b) on the inner peripheral side of the rotor blades 102 and the stator column 122 or the base portion 129.

Here, the turbomolecular pump 100 requires control based on the specification of a model and separately-adjusted unique parameters (for example, various characteristics corresponding to the model). In order to store the control parameters, the turbomolecular pump 100 includes an electronic circuit portion 141. The electronic circuit portion 141 includes electronic components such as a semiconductor memory like an EEP-ROM and a semiconductor element for accessing the semiconductor memory, a substrate 143 for mounting the electronic components, or the like. The electronic circuit portion 141 is accommodated at, for example, the lower portion of a rotating speed sensor not shown near the center of the base portion 129 constituting the lower portion of the turbomolecular pump 100, and is closed by an air-tight bottom lid 145.

Meanwhile, in a semiconductor manufacturing process, some process gases introduced into a chamber have the property of becoming solid when their pressure becomes higher than a prescribed value or when their temperature becomes lower than a prescribed value. Inside the turbomolecular pump 100, the pressure of exhaust gas is the lowest at the inlet port 101 and the highest at the outlet port 133. When the pressure of a process gas becomes higher than a prescribed value or when the temperature of the process gas becomes lower than a prescribed value during the transfer of the process gas from the inlet port 101 to the outlet port 133, the process gas becomes solid and adheres to and accumulates inside the turbomolecular pump 100.

For example, when SiCl4 is used as a process gas in an Al etching device, it appears from a vapor pressure curve that a solid product (for example, AlCl3) separates out and adheres to and accumulates inside the turbomolecular pump 100 in a low vacuum condition (from 760 Torr to 10⁻² Torr) and at a low temperature (about 20°C). Therefore, when the precipitate of a process gas accumulates inside the turbomolecular pump 100, the precipitate narrows down a pump flow path, which causes a reason for a reduction in the performance of the turbomolecular pump 100. Further, the product described above is liable to solidify at and adhere to a high-pressure portion near the outlet port 133 or the threaded spacer 131.

Therefore, in order to solve the above problem, a heater not shown or an annular water cooled tube 149 is wound on the periphery of the base portion 129 or the like, and a temperature sensor (for example, a thermistor) not shown is embedded in, for example, the base portion 129. Then, heating is performed by the heater or cooling control is performed by the water cooled tube 149 (hereinafter called TMS (Temperature Management System)) so that the temperature of the base portion 129 is retained at a constant high temperature (setting temperature) on the basis of a signal from the temperature sensor. In the present embodiment, the threaded spacer 131 is heated by a heater 148 embedded in the threaded spacer 131, and the base portion 129 is cooled by the water cooled tube 149 embedded in the bottom lid 145. These points will be described later.

Next, in regard to the turbomolecular pump 100 thus configured, the amplifier circuit 150 that controls the excitation of the upper radial electromagnets 104, the lower radial electromagnets 105, and the axial electromagnets 106A and 106B will be described. FIG. 2 shows a circuit diagram of the amplifier circuit 150.

In FIG. 2, an electromagnet coil 151 constituting the upper radial electromagnets 104 or the like has one end thereof connected to a positive electrode 171a of a power supply 171 via a transistor 161 and the other end thereof connected to a negative electrode 171b of the power supply 171 via a current detecting circuit 181 and a transistor 162. The transistors 161 and 162 are so-called power MOSFETs and have a structure in which a diode is connected between a source and a drain.

On this occasion, a cathode terminal 161a of the diode of the transistor 161 is connected to the positive electrode 171a, and an anode terminal 161b thereof is connected to one end of the electromagnet coil 151. Further, a cathode terminal 162a of the diode of the transistor 162 is connected to the current detecting circuit 181, and an anode terminal 162b thereof is connected to the negative electrode 171b.

On the other hand, a cathode terminal 165a of a diode 165 for current regeneration is connected to one end of the electromagnet coil 151, and an anode terminal 165b thereof is connected to the negative electrode 171b. Further, a cathode terminal 166a of a diode 166 for current regeneration is similarly connected to the positive electrode 171a, and an anode terminal 166b thereof is connected to the other end of the electromagnet coil 151 via the current detecting circuit 181. The current detecting circuit 181 includes, for example, a hall sensor type current sensor or an electric resistance element.

The amplifier circuit 150 thus configured corresponds to one electromagnet. Therefore, in a case in which the magnetic bearing performs five-axis control and the total number of the electromagnets 104, 105, 106A, and 106B is ten, the same amplifier circuit 150 is constituted for each of the electromagnets, and the ten amplifier circuits 150 are connected in parallel to the power supply 171.

In addition, an amplifier control circuit 191 includes, for example, a digital signal processor portion (hereinafter called a DSP portion) not shown of the control device 200. The amplifier control circuit 191 switches the ON/OFF of the transistors 161 and 162.

The amplifier control circuit 191 compares a current value (a signal reflecting the current value is called a current detecting signal 191c) detected by the current detecting circuit 181 with a prescribed current command value. Then, on the basis of a result of the comparison, the amplifier control circuit 191 determines the size (pulse width time Tp1 or Tp2) of a pulse width to be generated in a control cycle Ts showing one cycle in PWM control. Consequently, the amplifier control circuit 191 outputs gate driving signals 191a and 191b having the pulse width to the gate terminals of the transistors 161 and 162.

Note that when passing through a resonance point during the accelerating operation of the rotation of the rotating body 103 or when disturbance occurs during an operation at a constant speed, the position of the rotating body 103 is required to be controlled at a high speed and with a great force. Therefore, a high voltage of, for example, about 50 V is used as the power supply 171 so that a rapid increase (or decrease) in a current flowing through the electromagnet coil 151 is enabled. Further, a capacitor is generally connected between the positive electrode 171a and the negative electrode 171b of the power supply 171 to stabilize the power supply 171 (not shown).

In the configuration, a current (hereinafter called an electromagnet current iL) flowing through the electromagnet coil 151 increases when both the transistors 161 and 162 are turned ON, and the electromagnet current iL decreases when both the transistors 161 and 162 are turned OFF.

Further, a so-called flywheel current is retained when one of the transistors 161 and 162 is turned ON and the other thereof is turned OFF. Then, the feeding of the flywheel current to the amplifier circuit 150 as described above leads to a decrease in hysteresis loss in the amplifier circuit 150, which makes it possible to reduce the power consumption of the whole circuit. Further, the control of the transistors 161 and 162 as described above enables a reduction in high-frequency noise such as a higher harmonic wave caused in the turbomolecular pump 100. In addition, the measurement of the flywheel current with the current detecting circuit 181 enables the detection of the electromagnet current iL flowing through the electromagnet coil 151.

That is, when a detected current value is smaller than a current command value, the amplifier circuit 150 turns ON both the transistors 161 and 162 for a period corresponding to the pulse width time Tp1 only once in the control cycle Ts (for example, 100 µs) as shown in FIG. **3****.** Therefore, in the period, the electromagnet current iL increases toward a value iLmax (not shown) of the current capable of flowing through the transistors 161 and 162 from the positive electrode 171a to the negative electrode 171b.

On the other hand, when the detected current value is greater than the current command value, the amplifier circuit 150 turns OFF both the transistors 161 and 162 for a period corresponding to the pulse width time Tp2 only once in the control cycle Ts as shown in FIG. 4. Therefore, in the period, the electromagnet current iL decreases toward a value iLmin (not shown) of the current capable of being regenerated through the diodes 165 and 166 from the negative electrode 171b to the positive electrode 171a.

Then, in both cases, the amplifier circuit 150 turns ON one of the transistors 161 and 162 after the elapse of the pulse width time Tp1 or Tp2. Therefore, the flywheel current is retained in the amplifier circuit 150 in the period.

In the turbomolecular pump 100 having such a basic configuration, the upper side (the side of the inlet port 101) of FIG. 1 serves as a sucking portion connected to the side of target equipment, and the lower side (the side of the base portion 129 in which the outlet port 133 connected to an exhausting port 135 is provided so as to protrude to the left side of FIG. 1) thereof serves as an exhausting portion connected to an auxiliary pump (back pump) or the like not shown. Further, the turbomolecular pump 100 is usable in a vertical posture in a vertical direction as shown in FIG. 1 or usable in an inverted posture, a horizontal posture, or an inclined posture.

Further, in the turbomolecular pump 100, the outer cylinder 127 and the base portion 129 described above are combined together to constitute one case (hereinafter, the outer cylinder 127 and the base portion 129 are collectively called a "main-body casing" or the like in some cases). Further, the turbomolecular pump 100 is electrically (and structurally) connected to a box-shaped electric component case (not shown), and the control device 200 described above is incorporated into the electric component case.

The inner configuration of the main-body casing (a combination of the outer cylinder 127 and the base portion 129) of the turbomolecular pump 100 may be divided into a rotating mechanism portion that rotates the rotor shaft 113 or the like by the motor 121 and an exhausting mechanism portion that is rotationally driven by the rotating mechanism portion. Further, the exhausting mechanism portion may be divided into a turbomolecular pump mechanism portion that is constituted by the rotor blades 102, the stator blades 123, or the like and a thread groove mechanism portion (Holweck-type exhausting mechanism portion) that is constituted by the rotating-body lower cylindrical portion 103b, the threaded spacer 131, or the like.

Further, the purge gas (protecting gas) described above is used to protect a bearing portion, the rotor blades 102, or the like and prevents corrosion due to the exhaust gas (process gas) or cools the rotor blades 102. The supply of the purge gas is made possible by a general method.

For example, the above-described purge gas port (not shown) linearly extending in a radial direction is provided at a prescribed place (such as a position separated from the outlet port 133 by 90 degrees, 120 degrees, or the like) of the base portion 129. Then, the purge gas is supplied to the purge gas port via a purge gas cylinder (such as an N₂ gas cylinder), a flow regulator (valve device), or the like from the outside of the base portion 129.

The protecting bearing 120 described above is also called a "touch down (T/D) bearing," a "backup bearing," or the like. Even if trouble in an electrical system or trouble due to the intrusion of air occurs, the protecting bearing 120 prevents a great change in the position or posture of the rotor shaft 113 and damage on the rotor blades 102 or their peripheral portions.

Note that in FIG. 1 showing the structures of the turbomolecular pump 100 and the rotating body 103, hatching showing the cross sections of components is omitted to avoid the complication of the drawing.

### Foreign Matter Detection of Turbomolecular Pump 100 According to First Embodiment

### Outline of Foreign Matter Sensor 210

As described above, a product is accumulated inside the turbomolecular pump 100 in some cases. In the present embodiment, a deposit is detected using a foreign matter sensor 210 as shown in FIG. 5 in an enlarged fashion. The foreign matter sensor 210 is called an "deposition sensor," a "deposit sensor," or the like in some cases.

As schematically shown in FIG. **6****,** a type including an electrode portion 212, a capacitance measuring portion 214, and a signal converting portion 216 is employed as the foreign matter sensor 210. The electrode portion 212 changes a physical amount (here, capacitance) with the adhesion of a deposit. The capacitance measuring portion 214 receives a signal according to capacitance in the electrode portion 212.

The signal converting portion 216 converts a signal output from the capacitance measuring portion 214 into a digital signal and outputs the converted signal to a controlling portion (here, the control device 200). The control device 200 determines the state of the electrode portion 212 on the basis of information from the signal converting portion 216. A combination of the capacitance measuring portion 214 and the signal converting portion 216 constitutes a measurement converting portion 217. Note that the "conversion" here may be any of analog-digital conversion, digital-digital conversion, and digital-analog conversion.

### Electrode Portion 212

As schematically shown in FIG. 7, a type that detects a deposit on the basis of a change in the capacitance between a pair of electrodes A and B is employed as the electrode portion 212. The electrodes A and B are formed on a sensor substrate 218. The sensor substrate 218 is included in the electrode portion 212 and constitutes at least a part of the electrode portion 212.

The sensor substrate 218 is, for example, one in which a pair of comb-teeth-shaped electrodes (plane electrodes) A and B is formed on one plate surface 219 of a rectangular insulating substrate (here, a ceramic substrate).

The electrodes A and B do not contact or cross each other and are formed so that their teeth are opposed to each other in an engaging state without contacting with a prescribed gap formed therebetween. Between the electrodes A and B, an electric field is generated with the application of a high-frequency voltage from the capacitance measuring portion 214. The capacitance between the electrodes A and B becomes minimum in a clean state in which a deposit does not adhere to the electrodes A and **B.** When the amount of the deposit increases with the adhesion of the deposit, the capacitance between the electrodes A and B rises.

In the examples of FIGS. 1 and 5, the sensor substrate 218 is arranged at a place separated from the outlet port 133 by nearly 180 degrees. In the threaded spacer 131, a protruding portion 131b is positioned at a place separated from the outlet port 133 by nearly 180 degrees. The protruding portion 131b is provided at the end (the lower end in FIGS. 1 and 5) of the threaded spacer 131. The protruding portion 131b protrudes from an outside to a central side in the radial direction of the threaded spacer 131.

The sensor substrate 218 is mounted on and fixed to the protruding portion 131b. The fixation of the sensor substrate 218 to the protruding portion 131b is made possible via screws (not shown). Exhaust gas (process gas) contacts a plate surface 219 of the sensor substrate 218 fixed to the protruding portion 131b, while flowing through the plate surface 219. Therefore, the electrodes A and B contact the flowing exhaust gas (process gas).

As described above, the threaded spacer 131 is heated by the heater 148 shown by a two-dot chain line in FIG. 1 in the present embodiment. Further, the sensor substrate 218 (FIGS. 1 and 5) and the electrodes A and B (FIG. 7) formed on the sensor substrate 218 are also heated via the threaded spacer 131.

That is, the threaded spacer 131 constitutes a high-temperature portion of which the temperature becomes high when heated, and the electrodes A and B are disposed on the threaded spacer 131 serving as the high-temperature portion. The electrodes A and B are fixed to the threaded spacer 131 in a contacting state so as to enable heat transfer. As the threaded spacer 131 is heated by the heater 148, the heat of the threaded spacer 131 is transferred to the electrodes A and B to heat the same.

Here, the heater 148 may be arranged closer to the sensor substrate 218 than its position shown in FIG. **1****.** Further, the sensor substrate 218 is arranged at a position separated from the outlet port 133 in FIG. 1 by nearly 180 degrees, but the interval between the sensor substrate 218 and the outlet port 133 is not limited to 180 degrees. For example, the sensor substrate 218 may be arranged at a position separated from the outlet port 133 by 240 degrees, 270 degrees, or the like.

As shown in FIG. **5****,** a cylindrical insulating collar 221 perpendicularly protrudes from the other plate surface 220 of the sensor substrate 218. The insulating collar 221 is made of a material having electrical insulating performance. Electrode pins 222 are inserted into the insulating collar 221. Only one of the electrode pins 222 is shown in FIGS. 1 and **5****.** However, the number of the electrode pins 222 is two, and the electrode pins 222 are electrically connected to the electrodes A and **B,** respectively, formed on the sensor substrate 218.

The electrode pins 222 may be structurally integrated with a part of the electrodes A and B (including soldering, connector connection, or the like). Alternatively, the electrode pins 222 and the electrodes A and B may be electrically connected to each other via pattern wiring inside the sensor substrate 218.

The electrode pins 222 protrude further from the insulating collar 221 in the thickness direction of the protruding portion 131b. The protruding portion 131b is provided with a transmitting hole 131c penetrating in the thickness direction. The insulating collar 221 and the electrode pins 222 pass through the transmitting hole 131c and reach the base portion 129.

The base portion 129 is provided with a receiving hole 129a opposed to the transmitting hole 131c of the protruding portion 131b. The receiving hole 129a is spatially connected to a wiring hole (also called a "connector port") 129b formed on the base portion 129. The wiring hole 129b extends in the radial direction of the base portion 129, and the receiving hole 129a extends in a direction orthogonal to the wiring hole 129b.

The electrode pins 222 pass through the transmitting hole 131c and the receiving hole 129a and reach a measurement converting substrate 226 inside the wiring hole 129b.

### Capacitance Measuring Portion 214

The measurement converting substrate 226 has the capacitance measuring portion 214 (FIG. 6) described above. FIG. 8 shows a state in which the measurement converting substrate 226 in FIGS. 1 and 5 is seen from below the base portion 129 (from below FIGS. 1 and 5) in a plan view. The measurement converting substrate 226 is accommodated in a measurement substrate accommodation recessed portion 228 of the base portion 129 and fixed to the base portion 129. The fixation of the measurement converting substrate 226 to the base portion 129 is made possible via screws (not shown).

The fixation of the measurement converting substrate 226 to the base portion 129 is performed via a heat transfer promoting means. As the heat transfer promoting means, heat transferring grease (not shown) is employable. In this case, the heat transferring grease is applied to at least one of the measurement converting substrate 226 and a place contacting the measurement converting substrate 226 in the base portion 129.

As shown in FIG. 8, a measurement converting package 230 is mounted on the measurement converting substrate 226. The measurement converting package 230 is an IC (Integrated Circuit) package in which a measurement circuit portion 231 is embedded in a mold resin 230a. The measurement circuit portion 231 performs amplification, noise elimination, or the like with respect to a signal from the sensor substrate 218. The measurement circuit portion 231 corresponds to the capacitance measuring portion 214 in FIG. **6****.**

As shown in FIG. 8, the measurement converting substrate 226 is provided with power inputting terminals 232a and 232b used to input (supply) power to the measurement converting package 230 and sensor-substrate inputting terminals 234a and 234b used to input (supply) a signal to the sensor substrate 218 of the electrode portion 212.

FIG. 8 shows the state of the measurement converting substrate 226 before the two electrode pins 222 of the sensor substrate 218 are connected. The measurement converting substrate 226 has two through-holes 236a and 236b into which the electrode pins 222 are inserted. The electrode pins 222 of the sensor substrate 218 are inserted into the through-holes 236a and 236b and soldered.

Here, the connection between the electrode pins 222 and the measurement converting substrate 226 is not limited to soldering. For example, connectors (not shown) for receiving the electrode pins 222 may be provided in the measurement converting substrate 226 so that the electrode pins 222 are inserted into the connectors. Further, connectors having the electrode pins 222 may be mounted on the sensor substrate 218. In this case, the connectors of the sensor substrate 218 and the connectors of the measurement converting substrate 226 are connectable to each other.

A current flows through the electrode pins 222 at an interval corresponding to the capacitance between the electrodes A and **B.** The larger the capacitance between the electrodes A and B with the accumulation of a product, the shorter the interval at which the current flows through the electrode pins 222 becomes.

As described above, the base portion 129 is cooled by the water cooled tube 149 (FIGS. 1 and 5) in the present embodiment. The measurement converting substrate 226 is also cooled via the base portion 129. That is, the base portion 129 constitutes a low-temperature portion of which the temperature becomes low when cooled. The measurement converting substrate 226 is also disposed in the base portion 129 serving as the low-temperature portion.

As shown in FIG. 5, an annular heat insulating material 238 is interposed between the base portion 129 and the threaded spacer 131. The heat insulating material 238 is made of a material having heat insulating performance. The outer diameter of the heat insulating material 238 is nearly equal to the inner diameter of the outer cylinder 127, and the outer peripheral surface of the heat insulating material 238 contacts the inner peripheral surface of the outer cylinder 127. A gap 240 is formed between the inner peripheral surface of the heat insulating material 238 and the threaded spacer 131.

By the heat insulating material 238, the threaded spacer 131 constituting the high-temperature portion and the base portion 129 constituting the low-temperature portion are thermally insulated (separated) from each other. By the heat insulating material 238, heat transfer from the threaded spacer 131 to the base portion 129 is prevented.

### Signal Converting Portion 216 and Derivation of Converting Signal

In the present embodiment, the signal converting portion 216 (FIG. 6) described above is formed in the measurement converting substrate 226 in the present embodiment. The signal converting portion 216 corresponds to a signal converting circuit portion 242 embedded in the measurement converting package 230 as shown in FIG. **8****.** The signal converting circuit portion 242 includes circuit elements such as a signal converting circuit and an input/output circuit that are not shown, and is conductively connected to a vacuum connector 246 via conductive wiring (leading wire) 244 schematically shown in FIGS. 1 and 5.

A signal output from the signal converting circuit portion 242 may only be a signal available in the information processing of the control device 200. Further, the signal output from the signal converting circuit portion 242 may be, for example, a signal meeting specifications in which a condition such as a voltage and a current is standardized (conforming to a standardized format) or the like, but a system hardly influenced by noise or parasitic capacitance may be selected.

As described above, the signal of the measurement circuit portion 231 is not output as it is, but the measurement circuit portion 231 is combined with the signal converting circuit portion 242 to be unitized as the measurement converting package 230. As a result, the measurement converting package 230 is hardly influenced by noise or parasitic capacitance and easily arranged in a place different from the electrode portion 212.

Note that the embodiment of the capacitance measuring portion 214 and the signal converting portion 216 is not limited to the measurement converting package 230 but the respective electric circuits or circuit elements of the measurement circuit portion 231 and the signal converting circuit portion 242 may be arranged on the measurement converting substrate 226 so as to be mounted.

The vacuum connector 246 is provided in the wiring hole 129b of the base portion 129 so as to be capable of securing airtightness. The vacuum connector 246 is used for the electrical connection between the inside and the outside of the turbomolecular pump 100.

A control device cable 250 electrically connected to the control device 200 is connected to the vacuum connector 246. Via the vacuum connector 246, electric signals relating to equipment such as the various sensors, the electromagnets, and the motor described above inside the turbomolecular pump 100 are input/output. FIGS. 1 and 5 show a state in which a connector 250a of the control device cable 250 is separated from the wiring hole 129b.

### Advantages of Turbomolecular Pump 100 According to First Embodiment

According to the turbomolecular pump 100 described above, the electrode portion 212 is disposed in the high-temperature portion (here, the threaded spacer 131), and the capacitance measuring portion 214 and the signal converting portion 216 are disposed in the low-temperature portion (here, the base portion 129). Accordingly, it is possible to achieve both the accurate detection of an accumulated amount and the prevention of the overheat of the capacitance measuring portion 214 or the signal converting portion 216.

Further, the capacitance measuring portion 214 and the signal converting portion 216 of the foreign matter sensor 210 are arranged inside the base portion 129 and embedded in the turbomolecular pump 100. Accordingly, it is possible to minimize the length of the wiring (wiring distance) between the electrode portion 212 and the capacitance measuring portion 214 and the signal converting portion 216.

Therefore, for example, compared with a case in which the electrode portion 212 is arranged inside the turbomolecular pump 100 (inside the outer cylinder 127 or the base portion 129) and the capacitance measuring portion 214 or the signal converting portion 216 is arranged outside the turbomolecular pump 100, the turbomolecular pump 100 is hardly influenced by parasitic capacitance and enabled to more accurately and easily detect a change in capacitance.

Further, according to the turbomolecular pump 100 of the present embodiment, the sensor substrate 218 having the electrodes A and B is disposed on the threaded spacer 131 constituting the high-temperature portion. Accordingly, the temperatures of the electrodes A and B are easily brought close to the temperature of the threaded spacer 131 or the process gas (exhaust gas).

In addition, a place that is on the downstream side of the exhaust gas and contacts the exhaust gas is generally a place at which a deposit easily occurs. Accordingly, the electrodes A and B are usable under the same temperature environment as surroundings at the place at which a deposit easily occurs.

Further, the electrodes A and B are provided so as to contact the flowing exhaust gas (process gas). Therefore, the electrodes A and B are disposed facing an exhaust path. Accordingly, it is possible to more accurately detect the situation of a deposit.

Further, the measurement circuit portion 231 and the signal converting circuit portion 242 are molded in the measurement converting package 230. Therefore, heat generated in the measurement circuit portion 231 and the signal converting circuit portion 242 is diffused to the mold resin 230a. The heat diffused to the mold resin 230a is transferred to the base portion 129 via the measurement converting substrate 226. Accordingly, it is possible to efficiently radiate the heat of the measurement circuit portion 231 and the signal converting circuit portion 242 to the base portion 129 serving as a cooling portion. Further, it is possible to prevent the temperature of a place at which the measurement circuit portion 231 or the signal converting circuit portion 242 from locally rising.

Here, the measurement circuit portion 231 and the signal converting circuit portion 242 are packaged by the common mold resin 230a in the present embodiment but may be separately packaged.

In addition, at least the signal converting circuit portion 242 among the measurement circuit portion 231 and the signal converting circuit portion 242 may be arranged at a place outside a vacuum container (here, a combination of the outer cylinder 127 and the base portion 129) relating to the turbomolecular pump 100. As the place outside the vacuum container, a wall surface outside the outer cylinder 127 or the base portion 129, the inside of the control device 200, the place between the vacuum container and the control device 200, or the like is illustrated.

Further, the measurement converting substrate 226 contacts the base portion 129 via the heat transfer promoting means such as the heat transferring grease. Therefore, it is possible to more efficiently radiate the heat from the measurement circuit portion 231 and the signal converting circuit portion 242 to the base portion 129.

Further, according to the turbomolecular pump 100 of the present embodiment, the electrode pins 222 of the sensor substrate 218 are directly inserted into and connected to the measurement converting substrate 226 without cables (wiring codes). Accordingly, the electrodes A and B and the measurement converting substrate 226 are connectable to each other at the shortest distance as much as possible without cables. Further, since a change in parasitic capacitance due to the movement of cables does not occur, it is possible to accurately detect the occurrence situation of a deposit.

From the above circumstances, it is possible to accurately detect the occurrence situation of a deposit through a change in capacitance detected by the electrodes A and **B.** In addition, for example, compared with a turbomolecular pump 10 as shown in FIG. 14, the turbomolecular pump 100 is enabled to accurately detect foreign matter. In the turbomolecular pump 10 of FIG. 14, a common substrate 260 is disposed in a base portion 129, and an electrode portion 212, a capacitance measuring portion 214, and a signal converting portion 216 as shown in FIG. 6 are collectively disposed in the common substrate 260. Further, various wiring 262 is connected to the common substrate 260.

Note that the outlet port 133 and the wiring hole 129b (connector port) are arranged at the positions separated from each other by 180 degrees in the turbomolecular pump 100 of the first embodiment. However, the arrangement of the outlet port 133 and the wiring hole 129b is not limited to this. The positional relationship between the outlet port 133 and the wiring hole 129b (connector pot) is variously modifiable according to the circumstances of a purge port or other ports. For example, it is also possible to arrange the outlet port 133 and the purge port at positions separated from each other by 180 degrees and arrange the wiring hole 129b (connector port) at another position.

### Foreign Matter Detection of Turbomolecular Pump 300 According to Second Embodiment

Next, a turbomolecular pump 300 according to a second embodiment of the present invention will be described on the basis of FIGS. 9 to 11. Note that the same portions as those of the first embodiment will be denoted by the same symbols and their descriptions will be omitted where necessary.

In the second embodiment, the electric connection between a sensor substrate 218 and a measurement converting substrate 326 is performed via cables 302 instead of the electrode pins 222 as in the first embodiment. One end of each of the cables 302 is connected to the sensor substrate 218 by a method such as soldering and connector connection.

Only one of the cables 302 is shown in FIGS. 9 and 10, but the number of the cables 302 formed on the sensor substrate 218 is two corresponding to electrodes A and **B.** The electric connection between the cables 302 and the electrodes A and B may be performed via pattern wiring inside the sensor substrate 218. Note that a portion shown by symbol 310 in FIGS. 9 and 10 is a foreign matter sensor according to the second embodiment.

FIG. 11 shows a state in which the measurement converting substrate 326 in FIGS. 9 and 10 is seen from below the base portion 129 (from below FIGS. 9 and 10) in a plan view. The measurement converting substrate 326 is provided with sensor substrate output terminals 334a and 334b in addition to power input terminals 232a and 232b, sensor substrate input terminals 234a and 234b. The cables 302 extending from the sensor substrate 218 are electrically connected to the sensor substrate output terminals 334a and 334b.

### Advantages of Turbomolecular Pump 300 According to Second Embodiment

According to the turbomolecular pump 300 described above, parasitic capacitance due to the cables 302 possibly occurs compared with the first embodiment. However, in other respects, the turbomolecular pump 300 has the same advantages as those of the turbomolecular pump 100 according to the first embodiment.

### Foreign Matter Detection of Turbomolecular Pump 400 According to Third Embodiment

Next, a turbomolecular pump 400 according to a third embodiment of the present invention will be described on the basis of FIGS. 12 and 13. Note that the same portions as those of the first embodiment (or the second embodiment) will be denoted by the same symbols and their descriptions will be omitted where necessary.

In the example of FIGS. 12 and 13, a measurement converting package 230 is mounted on an electronic circuit portion 441. The electronic circuit portion 441 is upsized compared with the first and second embodiments. In a base portion 429, a space 429c for accommodating the electronic circuit portion 441 is secured with a diameter larger than those of the spaces 129c formed in the base portions 129 of the first and second embodiments.

The electronic circuit portion 441 is fixed to an axial sensor 109. On the electronic circuit portion 441, a storage circuit portion (IC package) storing the ID (individual identification information) of the turbomolecular pump 400 is mounted although not shown in the figures. The same applies to the electronic circuit portions 141 of the first and second embodiments. The IC package storing the ID of the turbomolecular pump 400 may be integrated with the measurement converting package 230 to include a measurement circuit portion 231 or a signal converting circuit portion 242.

The electric connection between the electronic circuit portion 441 and a sensor substrate 218 is performed via cables 402. The connection of the respective ends of the cables 402 to the sensor substrate 218 or the electronic circuit portion 441 is performed like the second embodiment (FIGS. 9 to 11).

The electric connection between the electronic circuit portion 441 and a vacuum connector 246 is performed via conductive wiring (leading wires) 444. The connection of the conductive wiring 444 to the electronic circuit portion 441 is performed like the connection of the conductive wiring 244 to the electronic circuit portions 141 in the first and second embodiments. Further, the connection of the conductive wiring 444 to the vacuum connector 246 is performed like the connection of the conductive wiring 244 to the vacuum connectors 246 in the first and second embodiments.

The fixation of the electronic circuit portion 441 to the axial sensor 109 may be performed via a heat transfer promoting means such as heat transferring grease if any particular problem does not occur. Note that a portion shown by symbol 410 in FIGS. 12 and 13 is a foreign matter sensor according to the third embodiment.

### Advantages of Turbomolecular Pump 400 According to Third Embodiment

According to the turbomolecular pump 400 described above, the electronic circuit portion 441 is arranged inside the base portion 429, and the base portion 429 is thermally insulated (separated) from a threaded spacer 131 via a heat insulating material 238. Accordingly, it is possible to cool the electronic circuit portion 441 and prevent the rising of the temperature of the electronic circuit portion 441.

In addition, it is possible to radiate the heat of a measurement circuit portion 231 or a signal converting circuit portion 242 to the electronic circuit portion 441 via a mold resin 230a of the measurement converting package 230 like the first and second embodiments. Further, it is possible to radiate the heat to the base portion 429 via the mold resin 230a of the measurement converting package 230 or the electronic circuit portion 441.

### Inventions Extractable from Respective Embodiments

The following inventions are extractable from the respective embodiments described above.
(1) A vacuum pump (such as a turbomolecular pump 100, 300, or 400) including:
   a vacuum container (such as a combination of an outer cylinder 127 and a base portion 129) having an exhaust path through which exhaust gas flows; a high-temperature portion (such as a threaded spacer 131) to be heated by a heating means (such as a heater 148); a low-temperature portion (such as the base portion 129) to be cooled by a cooling means (such as a water cooled tube 149); and a foreign matter sensor (such as a foreign matter sensor 210, 310, or 410) that detects foreign matter, wherein
   the foreign matter sensor includes
   a pair of electrodes (such as electrodes A and B) of which capacitance is variable with accumulation of foreign matter, and a capacitance measuring means (such as a capacitance measuring portion 214 and a combination of the capacitance measuring portion 214 and a signal converting portion 216) that measures the capacitance between the electrodes,
   the electrodes are disposed in the high-temperature portion, and
   the capacitance measuring means is disposed in the low-temperature portion.
(2) The vacuum pump according to (1), wherein
   the electrodes are disposed facing the exhaust path.
(3) The vacuum pump according to (1) or (2), wherein
   the capacitance measuring means is disposed inside the vacuum container.
(4) The vacuum pump according to (1) or (2), wherein
   the capacitance measuring means is molded by a resin (such as molding by a mold resin 230a).
(5) The vacuum pump according to (1) or (2), wherein
   the capacitance measuring means is heat-exchangeably disposed in the low-temperature portion.
(6) The vacuum pump according to (1) or (2), wherein
   the capacitance measuring means is directly connected to pins (such as electrode pins 222) extending from the electrodes.
(7) A foreign matter sensor (such as a foreign matter sensor 210, 310, or 410) that is used in a vacuum pump having a vacuum container (such as a combination of an outer cylinder 127 and a base portion 129) having an exhaust path through which exhaust gas flows, a high-temperature portion (such as a threaded spacer 131) to be heated by a heating means (such as a heater 148), and a low-temperature portion (such as the base portion 129) to be cooled by a cooling means (such as a water cooled tube 149) and detects foreign matter, the foreign matter sensor including:
   a pair of electrodes (such as electrodes A and B) of which capacitance is variable with accumulation of foreign matter; and a capacitance measuring means (such as a capacitance measuring portion 214) that measures the capacitance between the electrodes, wherein
   the electrodes are disposed in the high-temperature portion, and
   the capacitance measuring means is disposed in the low-temperature portion.

### Other

Note that the present invention is not limited to the respective embodiments described above and various modifications or combinations of the respective embodiments are made possible without departing from the gist.

100, 300, 400 Turbomolecular pump
127 Outer cylinder
129, 429 Base portion
131 Threaded spacer
148 Heater
149 Water cooled tube
210, 310, 410 Foreign matter sensor
212 Electrode portion
214 Capacitance measuring portion
216 Signal converting portion
218 Sensor substrate
222 Electrode pin
226 Measurement converting substrate
230 Measurement converting package
231 Measurement circuit portion
242 Signal converting circuit portion
244, 444 Conductive wiring
302, 402 Cable
326 Measurement converting substrate
A Electrode
B Electrode

## Claims

1. A vacuum pump comprising:
a vacuum container having an exhaust path through which exhaust gas flows; a high-temperature portion to be heated by a heating means; a low-temperature portion to be cooled by a cooling means; and a foreign matter sensor that detects foreign matter, wherein
the foreign matter sensor includes
a pair of electrodes of which capacitance is variable with accumulation of foreign matter, and a capacitance measuring means that measures the capacitance between the electrodes,
the electrodes are disposed in the high-temperature portion, and
the capacitance measuring means is disposed in the low-temperature portion.

2. The vacuum pump according to claim 1, wherein
the electrodes are disposed facing the exhaust path.

3. The vacuum pump according to claim 1 or 2, wherein
the capacitance measuring means is disposed inside the vacuum container.

4. The vacuum pump according to claim 1 or 2, wherein
the capacitance measuring means is molded by a resin.

5. The vacuum pump according to claim 1 or 2, wherein
the capacitance measuring means is heat-exchangeably disposed in the low-temperature portion.

6. The vacuum pump according to claim 1 or 2, wherein
the capacitance measuring means is directly connected to pins extending from the electrodes.

7. A foreign matter sensor that is used in a vacuum pump having a vacuum container having an exhaust path through which exhaust gas flows, a high-temperature portion to be heated by a heating means, and a low-temperature portion to be cooled by a cooling means and detects foreign matter, the foreign matter sensor comprising:
a pair of electrodes of which capacitance is variable with accumulation of foreign matter; and a capacitance measuring means that measures the capacitance between the electrodes, wherein
the electrodes are disposed in the high-temperature portion, and
the capacitance measuring means is disposed in the low-temperature portion.
